# EUROPEAN PATENT APPLICATION

(11) **EP 1 953 051 A2**
(43) Date of publication of application: **06.08.2008**
(21) Application number: 08001539.9
(22) Date of filing: 28.01.2008
(51) Int. Cl.: B60R 25/10

(54) **Antitheft device for vehicle**

(30) Priority: 01.02.2007 JP 2007023034
(71) Applicant: Denso Corporation, Kariya-city, Aichi-pref. 448-8661 (JP)
(72) Inventor: Harata, Yuuzou, Kariya-city Aichi-pref., 448-8661 (JP); Yoshikawa, Hirohiko, Kariya-city Aichi-pref., 448-8661 (JP)
(74) Representative: Kuhnen & Wacker

(57) **Abstract**

An antitheft device for a vehicle (10) includes a controller (91). The vehicle (10) has a security mechanism (30), a warning device (60), a first opening/closing object (13 to 17), a second opening/closing object (12), and a portable unit (50). The portable unit (50) transmits a signal to perform a security set of the security mechanism (30) when the portable unit (50) is operated. The controller (91) is configured to cause the warning device (60) at a predetermined time to warn the user that the security set is unable to be performed, if the portable unit (50) is operated while the first opening/closing object (13 to 17) and the second opening/closing object (12) are opened.

## Description

The present invention relates to an antitheft device for a vehicle. For example, it relates to an antitheft device for a vehicle wherein, when an opening/closing object of a vehicle is closed and a security mechanism cannot be set, the information of the above situation is given to a user as a warning.

Hereinafter, a first opening/closing object means an opening/closing object (e.g., a backdoor, a slide door, a swing door) that allows a user of the vehicle to enter into an occupant compartment of the vehicle directly through the opening/closing object from an exterior of the vehicle. In contrast, a second opening/closing object means the other opening/closing object (e.g., hood, luggage door) that does not allow (i.e., that is not intended to allow) the user to enter into the occupant compartment directly through the other opening/closing object from the exterior of the vehicle.

Due to electronization of vehicles in recent years, the key system for vehicles is gradually changing from a mechanical key system using a cylinder key to a wireless electronic key system (hereafter, called a "wireless key system"). For example, the wireless key system may be referred to as a smart key system, an intelligent key system, etc. (See, for example, JP-A-2006-16791 corresponding to US 2007/0024419).

A conventional wireless key system works with a security mechanism of a vehicle. For example, a person sensor serving as the security mechanism for sensing a person, is mounted in the system, and therefore, an alarm is given when a suspicious person approaches the vehicle. Furthermore, when the suspicious person intrudes into a cabin of the vehicle, a siren goes off instantly. Also, a vibration sensor, for example, is mounted to serve as the security mechanism. Typically, a warning is given when a slight vibration is detected, and the siren goes off when a considerable vibration is detected. Still further, there is available a remote sensor, which is associated with a portable telephone or an information center, and which is capable of informing the vehicle's user (being a driver in most cases) or a center operator of the intrusion of the suspicious person into the vehicle. Also, there is one adopting a panic mode. In the panic mode, first, a wireless lock button of a portable unit (a keyless remote control) is depressed to turn off a hazard lamp. If the wireless lock button is depressed again within a predetermined time after the turning of the hazard lamp, the siren goes off. By using the above panic mode, the user can safely repel the suspicious person around his or her car while the user is positioned away from the vehicle.

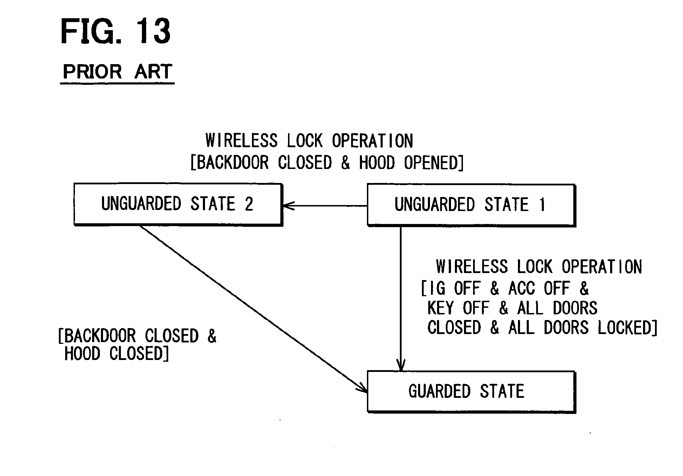

In general, setting and resetting of a security mechanism (hereafter, simply called the "security") is associated with locking/unlocking of the opening/closing mechanism of the first open/close objects. As a result, it is possible to set or reset (e.g., activate or deactivate) the security by using a portable unit. However, the security is so configured that it cannot be set unless a vehicle is parked (i.e., unless the first opening/closing object and the second opening/closing object are all closed). That is, the security is set by depressing the wireless lock button of the portable unit (i.e., the security is set by the wireless lock operation) in a state where all of the first and second opening/closing objects are closed and an engine is stopped. To be specific, as shown in FIG. 13, when a security set operation that is triggered by the wireless lock operation is performed in an unguarded state 1, all of the first open/close objects are locked in a state where an ignition (IG) is "OFF," accessories (ACC) are "OFF," a key (KEY) is "OFF," and all of the first open/close objects are closed. Then, the unguarded state 1 of the vehicle is shifted to a guarded state. In the above operation, the security is not set (activated) in the unguarded state 1. Note that if the state of the vehicle is shifted to the guarded state, the security is set after a predetermined time has elapsed since a time when the state has been shifted to the guarded state, for example.

On the other hand, the operation of the wireless lock does not require the second open/close object (e.g., a hood (bonnet), a luggage door) to be closed, but the operation of the security set requires the second open/close object (e.g., hood) to be closed. As a result, if the second open/close object is opened, the state of the vehicle is not shifted to the guarded state. That is, when the wireless lock operation of the portable unit is executed while the hood is open, the answerback of the lock is given, and then, the lock is temporarily cancelled (corresponding to the unguarded state 2, where the security feature is temporarily cancelled). When the hood is closed later, it is determined that the prerequisite condition of the security set is met, and the state of the vehicle is shifted to the guarded state.

Conventionally, since the wireless lock cannot be conducted when the backdoor is open, the user is not able to set the security unless the backdoor is closed. In particular, when the backdoor is automatically opened and closed by a backdoor opener, the user depressed the power backdoor button of the portable unit, and after the power backdoor is closed, the user depressed the wireless lock button.

On the other hand, a modification is proposed to modify a condition for shifting the state of the vehicle from the unguarded state 1 to the guarded state shown in FIG. 13. In the modification, when the wireless lock operation of the portable unit is performed in a state, where the backdoor is open (or where the backdoor is being driven by the backdoor opener to be closed), the security set operation triggered by the wireless lock operation is stored. After this, when the backdoor is closed , the state shifts from the unguarded state 1 to the guarded state. That is, when the wireless lock operation of the portable unit is performed while the backdoor is open, the security is set at a time when the backdoor opener has closed the backdoor. Also, it is assumed that the backdoor lock position does not become unlocked hardware-wise even if the backdoor is closed after the wireless lock operation.

In the modification, if the wireless lock operation of the portable unit is conducted in a state where the hood is closed and the backdoor is opened, the state of the vehicle is shifted from the unguarded state 1 to the guarded state when the backdoor becomes closed. However, if the wireless lock operation of the portable unit is conducted in a state where the hood is opened and the backdoor is opened, the state of the vehicle is not shifted from the unguarded state 1 to the guarded state even when the backdoor becomes closed. Therefore, even when the hood is closed later, the security is not set. In other words, according to the modification, when the hood is opened, the security set operation triggered by the wireless lock operation is not stored. For example, when the wireless lock operation is made while the hood is opened, the wireless lock operation may trigger a command signal for activating the security, but the command signal may not remain active. Therefore, when the security set operation triggered by the wireless lock operation is conducted, the security is able to be set or is not able to be set depending on the opening state of the hood. For this reason, even when the user thinks that the user has performed the security set operation triggered by the wireless lock operation, the security may not be set disadvantageously, and also a warning may not be given disadvantageously even if a suspicious person intrudes into the vehicle.

The present invention is made in view of the above disadvantages. Thus, it is an objective of the present invention to provide a vehicular antitheft device, which warns that the security cannot be set regardless of an order of an operation of closing first and second opening/closing objects if a portable unit operates a security set operation of the first opening/closing object while the first and the second opening/closing objects are opened.

It is another objective of the present invention to provide a vehicular antitheft device, which stores a security set operation by a portable unit regardless of an opening/closing state of a second opening/closing object if a first opening/closing object is opened, and which shifts a state of a vehicle to a guarded state at a time when the first opening/closing object is closed, and which then performs the security set.

To achieve the objective of the present invention, there is provided an antitheft device for a vehicle, wherein the vehicle has a security mechanism, a warning device, a first opening/closing object, a second opening/closing object, and a portable unit, wherein the first opening/closing object allows a user of the vehicle to enter into an occupant compartment through the first opening/closing object from an exterior of the vehicle, wherein the second opening/closing object is restricted from allowing the user to enter into the occupant compartment through the second opening/closing object, wherein the portable unit transmits a signal to perform a security set of the security mechanism when the portable unit is operated, the antitheft device including a controller. The controller is configured to cause the warning device at a predetermined time to warn the user that the security set is unable to be performed, if the portable unit is operated while the first opening/closing object and the second opening/closing object are opened.

To achieve the objective of the present invention, there is also provided an antitheft device for a vehicle, wherein the vehicle has a security mechanism, a first opening/closing object, and a portable unit, wherein the first opening/closing object allows a user of the vehicle to enter into an occupant compartment through the first opening/closing object from exterior of the vehicle, wherein the portable unit transmits a signal to perform a security set of the security mechanism when the portable unit is operated, the antitheft device including a memory and a controller. The memory is configured to store the security set operation of the security mechanism when the portable unit is operated while the first opening/closing object is opened. The controller is configured to shift a state of the vehicle into a certain state at a time when the first opening/closing object becomes closed, wherein the security set of the security mechanism is able to be performed in the certain state based on the security set operation stored in the memory.

The invention, together with additional objectives, features and advantages thereof, will be best understood from the following description, the appended claims and the accompanying drawings in which:
FIG. 1 is a block diagram showing a construction of a vehicle carrying an antitheft device for the vehicle according to Embodiment 1 of the present invention;
FIG. 2 is a schematic diagram showing a backdoor opener;
FIG. 3 is a plan view showing a portable unit;
FIG. 4 is a schematic diagram showing that a first opening/closing object is a backdoor;
FIG. 5 is a flowchart showing ID code verification processing in an in-vehicle unit and the portable unit of the antitheft device for the vehicle according to **Embodiment 1;**
FIG. 6 is a flowchart showing backdoor open/close processing in the in-vehicle unit and portable unit of the antitheft device for the vehicle according to Embodiment 1;
FIG. 7 is a flowchart showing wireless lock processing in the portable unit and in-vehicle unit of the antitheft device for the vehicle according to Embodiment 1 when a wireless lock button of the portable unit is depressed while a hood is opened;
FIG. 8 is a flowchart showing wireless lock processing in the portable unit and in-vehicle unit according to Modification 1 of Embodiment 1 when the wireless lock button of the portable unit is depressed while the hood is opened;
FIG. 9 is a flowchart showing wireless lock processing in the portable unit and in-vehicle unit according to Modification 2 of Embodiment 1 when the wireless lock button of the portable unit is depressed while the hood is opened;
FIG. 10 is a flowchart showing wireless lock processing in the portable unit and in-vehicle unit of an antitheft device for the vehicle according to Embodiment 2;
FIG. 11 is a schematic diagram illustrating an example in which the first opening/closing object is a slide door;
FIG. 12 is a schematic diagram illustrating an example in which the first opening/closing object is a swing door; and
FIG. 13 is a state transition diagram showing a transition from an unguarded state 1 to a guarded state in a conventional art.

Now, referring to the drawings, embodiments of the present invention will be described in detail.

### (Embodiment 1)

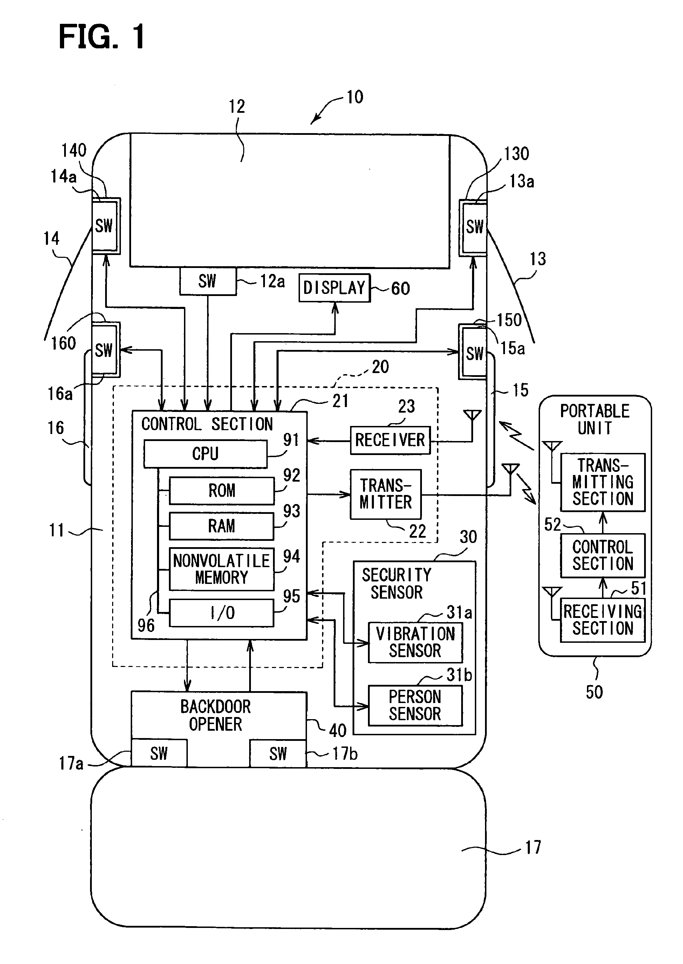

FIG. 1 is a block diagram showing a construction of a vehicle 10 which carries an antitheft device for a vehicle according to Embodiment 1 of the present invention. The vehicle 10, for example, is of a mini-van type that includes a body 11. The body 11 of the vehicle 10 has a hood (bonnet) 12, which is a second opening/closing object ( second object), a driver seat swing door 13, a passenger seat swing door 14, a right slide door 15, a left slide door 16, and a backdoor 17, all of which are first opening/closing objects (first objects). Thus, the vehicle 10 is not provided with a luggage door.

The antitheft device for the vehicle according to Embodiment 1 includes an in-vehicle unit 20 mounted on the side of the body 11 of the vehicle 10, a security sensor 30, a backdoor opener 40, which opens and closes the backdoor 17 of the vehicle 10, and a portable unit 50, which can be carried freely.

The in-vehicle unit 20 has a function of sending to and receiving from the portable unit 50 a radio signal including an ID code and/or a command for identifying the vehicle 10. Also, the in-vehicle unit 20 has a function of locking and unlocking the driver seat swing door 13, passenger seat swing door 14, right slide door 15, left slide door 16, and backdoor 17 of the vehicle 10. The above in-vehicle unit 20 includes a control section 21, a transmitter 22, and a receiver 23.

The control section 21 is constituted as a known ECU (Electric Control Unit) to which a CPU (Central Processing Unit) 91, a ROM (Read Only Memory) 92, a RAM (Random Access Memory) 93, a nonvolatile memory 94, and an I/O (Input/Output) 95 are connected through a bus line 96. A control program is stored in the ROM 92 and work memory is formed in the RAM 93. An ID (Identification) code of the vehicle 10 is stored in the nonvolatile memory 94. The CPU 91 reads the control program in the ROM 92 and executes the program using the work memory of the RAM 93 as a work area.

The control section 21 is connected to a hood courtesy switch 12a, a closer 130 including a driver seat swing door courtesy switch 13a, a closer 140 including a passenger seat swing door courtesy switch 14a, a slide door opener 150 including a right slide door courtesy switch 15a, a slide door opener 160 including a left slide door courtesy switch 16a, and the backdoor opener 40 including a backdoor courtesy switch 17a and a backdoor full open switch 17b. Also, the control section 21 is connected to a vehicle warning device 60 (warning device), such as a meter system and a navigation system, which can give a warning with sound, light, etc.

The control section 21 has a function of identifying the vehicle 10 based on the ID code included in the radio signal sent and received between the control section 21 and the portable unit 50 through the transmitter 22 and receiver 23. The control section 21 determines the locked or unlocked state of the driver seat swing door 13, the passenger seat swing door 14, the right slide door 15, the left slide door 16, and the backdoor 17 of the vehicle 10. Moreover, according to Embodiment 1, the user who carries the portable unit 50 operates the portable unit 50 to drive the backdoor opener 40 for automatically opening and closing the backdoor 17.

The transmitter 22 is installed at a predetermined position of the vehicle body 11 and sends a radio signal including an ID code inputted from the control section 21 to the outside. The transmitter 22 modulates the ID code into one with a predetermined frequency (for example, 140 kHz) and sends a radio signal (call signal) including the ID code at predetermined time intervals t1 (for example, 300 ms) to the outside.

The receiver 23 is installed at a predetermined position of the vehicle body 11. Further, the receiver 23 receives and demodulates the radio signal including the ID code and/or command sent from the portable unit 50, and outputs the demodulated ID code and/or command to the control section 21. The receiver can receive signals within a communicating distance of the portable unit 50.

The security sensor 30 detects a vibration or a person near and inside of the cabin of the vehicle 10, converts the detection to a pulse signal, and outputs the pulse signal to the control section 21. In Embodiment 1, the security sensor 30 includes a vibration sensor 31 a and a person sensor 31 b. When a suspicious person intrudes into a vehicle, the above sensors detect the vibration and the person and convert the detection to the pulse signal. The security sensor 30 starts operation or is activated when the security is set.

The backdoor opener 40 is an automatic opening/closing mechanism for automatically opening and closing the backdoor 17. That is, the backdoor opener 40 receives, from the control section 21, a backdoor open signal or a backdoor close signal for opening or closing the backdoor 17 and, based on such a signal, opens or closes the backdoor 17 automatically. That is, the backdoor 17 is a backdoor of a power backdoor type.

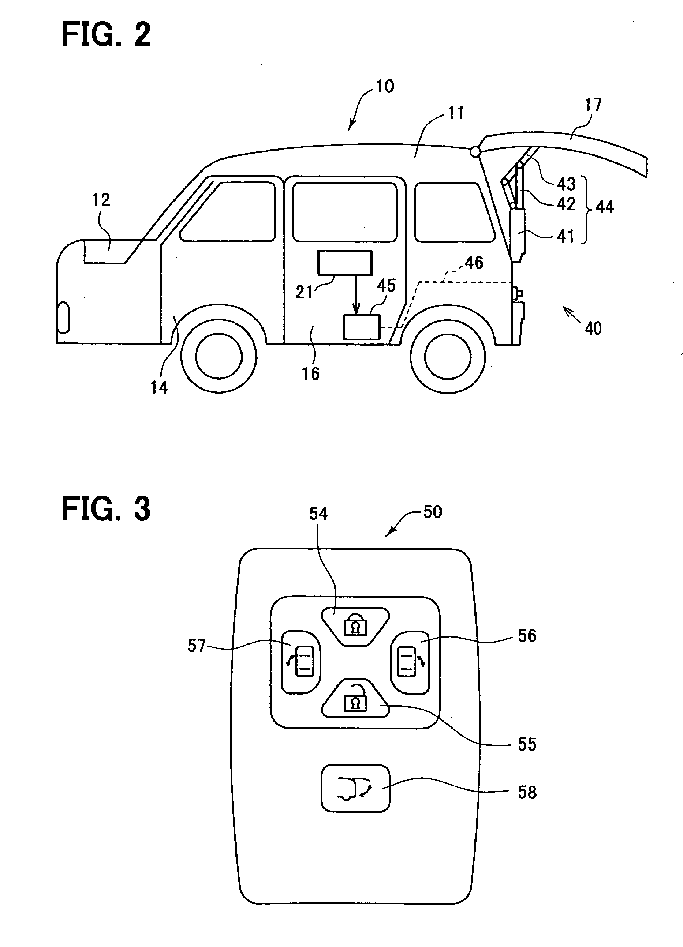

A specific construction of the backdoor opener 40 is shown in FIG. 2. FIG. 2 is a schematic diagram of the backdoor opener 40. The backdoor opener includes an opening/closing mechanism 44 and a drive mechanism 45. The opening/closing mechanism 44 includes a hydraulic cylinder 41, a piston rod 42, which expands and contracts in the longitudinal direction of the hydraulic cylinder 41, and a V-shaped linking member 43. The drive mechanism 45 drives the opening/closing mechanism 44.

The opening/closing mechanism 44 is mounted between the vehicle body 11 and the backdoor 17, and one end of the hydraulic cylinder 41 is attached to the vehicle body 11. Also, one end of the V-shaped linking member 43 is attached to the backdoor 17, and the other end thereof is fixed to the other end of the hydraulic cylinder 41. Further, the top of the piston rod 42 projecting from the hydraulic cylinder 41 is fixed between the bending point and the one end of the linking member 43.

Though not shown in detail, the drive mechanism 45 includes a cylinder and a piston for supplying oil to the hydraulic cylinder 41 of the opening/closing mechanism 44, and includes a drive motor for driving the piston inside the cylinder. The cylinder of the drive mechanism 45 and the hydraulic cylinder 41 of the opening/closing mechanism 44 are connected with each other through an oil supplying tube 46 filled with oil.

According to the above backdoor opener 40, when opening the backdoor 17, the drive motor of the drive mechanism 45 is rotated to slide the cylinder. Then, the piston is pushed toward the oil supplying tube 46 to supply the oil inside the cylinder, through the oil supplying tube 46, to the hydraulic cylinder 41 of the opening/closing mechanism 44. In the hydraulic cylinder 41 of the opening/closing mechanism 44, the piston rod 42 is extended by the oil pressure of the oil supplied from the oil supplying tube 46. As the degree of a bending angle at the bending point of the linking member 43 increases, the backdoor 17 opens.

When closing the backdoor 17, the drive motor of the drive mechanism 45 is rotated in a reverse direction so that the backdoor 17 is closed by the reverse action as compared to the case of opening the backdoor 17.

The backdoor 17 is automatically opened and closed based on the backdoor opening signal or backdoor closing signal inputted from the control signal 21 to the drive mechanism 45 of the backdoor opener 40.

Further, the in-vehicle unit 20, the security sensor 30, and the backdoor opener 40 can always be activated by electric power being supplied from a battery etc. mounted on the vehicle 10.

**FIG. 3** **is a plan view of the portable unit 50. The portable unit 50 includes a** door-lock button 54, a door-unlock button 55, a right power slide door button 56, a left power slide door button 57, and a power backdoor button 58.

Together with the in-vehicle unit 20, the portable unit 50 controls the locking or unlocking of doors of the vehicle 10 as a wireless key system. Further, based on such an operation, the portable unit 50 is also used for automatically opening and closing the first opening/closing objects, such as the backdoor 17 of the vehicle 10. To describe particularly, even when the portable unit 50 is just carried by the user, the portable unit 50 identifies the vehicle 10 through processing between the portable unit 50 and the in-vehicle unit 20 mounted on the vehicle body 11. Further, the portable unit 50 can lock and unlock the driver seat swing door 13, passenger seat swing door 14, right slide door 15, left slide door 16, and backdoor 17 of the vehicle 10. The portable unit 50 can also conduct the automatic opening/closing operations etc. of the right slide door 15, left slide door 16, and backdoor 17. For example, by manipulating the power backdoor button 58 of the portable unit 50, the backdoor 17 can automatically be opened or closed.

As shown in FIG. 1, the portable unit 50 includes a receiving section 51, a control section 52, and a transmitting section 53.

The receiving section 51 receives a radio signal including an ID code (call signal) sent from the transmitter 22 of the in-vehicle unit 20, and demodulates the ID code. The receiving section 51 outputs the demodulated ID code to the control section 52.

The control section 52 is comprised of a known microcomputer. The control section 52 receives an ID code from the receiving section 51, and determines whether or not the above ID code matches with an ID code of the portable unit 50 set in advance in the control section 52. If the control section 52 determines that the above ID code is identical to the ID code set in advance, the control section 52 outputs the ID code set in the control section 52 to the transmitting section 53. When the control section 52 determines that the ID code received through the receiving section 51 is different from the ID code set in the control section 52, it does not output the ID code.

When one of the door-lock button 54, door-unlock button 55, right power slide door button 56, left power slide door button 57, and power backdoor button 58 is manipulated, the control section 52 outputs one of the corresponding door lock command, door unlock command, right power slide door open/close command, left power slide door open/close command, and power backdoor open/close command to the transmitting section 53.

The transmitting section 53 modulates the ID code and/or command received from the control section 52, and converts it to one having a predetermined frequency (for example, 340 MHz). The transmitting section 53 further sends the radio signal including the ID code and/or a command to the outside. The radio signal including the ID code and/or command sent from the transmitting section 53 is received by the receiver 23 of the in-vehicle unit 20.

In addition, the portable unit 50 is provided with a power source which is not illustrated, and it can always be in commission.

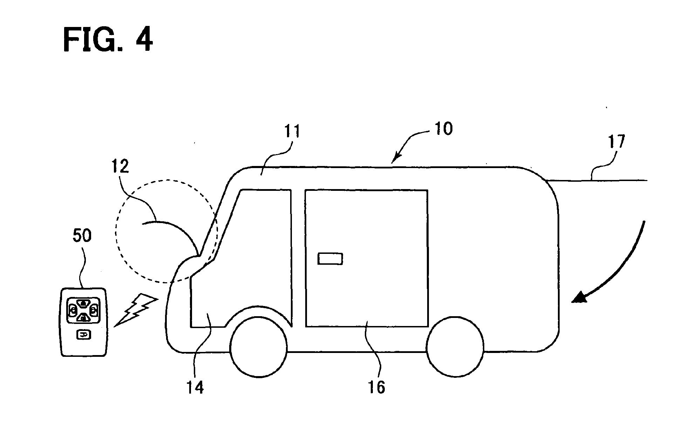

FIG. 4 shows a state wherein the user manipulates the power backdoor button 58 of the portable unit 50 when the hood 12, which is the second open/close object, is opened and the backdoor 17, which is the first open/close object, is opened.

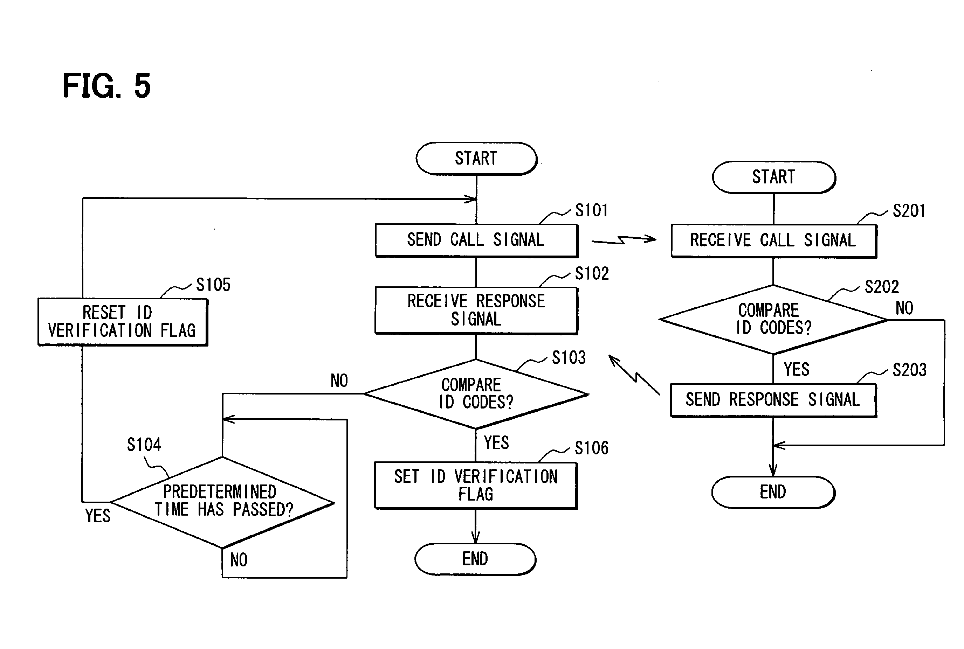

Now, referring to flowcharts of FIGS. 5 to 7, workings of the antitheft device for the vehicle according to Embodiment 1 constructed as above will be described.

FIG. 5 is a flowchart which shows ID code verification processing between the in-vehicle unit 20 and the portable unit 50.

The in-vehicle unit 20 sends call signals at predetermined time intervals t1 (for example, 300 ms) (S101 of FIG. 5). To describe particularly, the control section 21 of the in-vehicle unit 20 reads the ID code of the vehicle 10 set in advance in the nonvolatile memory 94, modulates it, and transmits to the exterior the call signal including the ID code from the transmitter 22.

When the portable unit 50 enters an area where the portable unit 50 can communicate with the in-vehicle unit 20, the portable unit 50 receives the call signal including the ID code (S201 of FIG. 5). To describe particularly, the receiving section 51 of the portable unit 50 receives the call signal including the ID code transmitted from the in-vehicle unit 20, and demodulates the call signal, and then, the receiving section 51 outputs the ID code to the control section 52.

The control section 52 compares the ID codes (S202 in FIG. 5). To describe particularly, the control section 52 receives the ID code from the receiving section 51, and compares this ID code with the ID code of the portable unit 50 set in advance in the control section 52.

If it is determined that the received ID code matches the ID code of the portable unit 50 set in advance in the control section 52 (S202 in FIG. 5: YES), the control section 52 outputs the ID code of the portable unit 50 to the transmitting section 53.

When the ID code of the portable unit 50 is received from the control section 52, the transmitting section 53 modulates the ID code, sends the radio signal (response signal) including the ID code to the outside (step S203 of FIG. 5), and ends the comparison of the ID codes.

When it is determined that the received ID code and the ID code of the portable unit 50 set in advance in the control section 52 do not match with each other (step S202 in FIG. 5: NO), the control section 52 ends the comparison of the ID codes without sending the response signal from the portable unit 50 to the corresponding call signal sent by the in-vehicle unit 20.

**When the response signal, which includes the ID code, is sent from the** portable unit 50, the receiver 23 of the in-vehicle unit 20 receives the response signal including the ID code sent from the portable unit 50, demodulates it, and outputs the demodulated ID code to the control section 21 (step S102 of FIG. 5).

The control section 21 receives the demodulated ID code, and compares the code with the ID code of the vehicle 10 set in advance in the nonvolatile memory 94 (S103 in FIG. 5).

In spite of having sent the call signal which includes the ID code from the in-vehicle unit 20, when the response signal is not sent from the portable unit 50 or when the demodulated ID code and the ID code of the vehicle 10 do not match with each other, the control section 21 determines that the ID codes have not matched with each other (S103 in FIG. 5: NO), and determines whether or not a predetermined time t1 has passed (S104 in FIG. 5). If the predetermined time t1 has not passed (S104 in FIG. 5: NO), the control section 21 repeats the determination at step S104. In step S104, it is determined whether the predetermined time t1 has elapsed as above. Typically, the call signal including the ID code is intermittently sent from the in-vehicle unit 20 every predetermined time interval t1 even when the response signal is not sent from the portable unit 50.

And when the predetermined time t1 has passed (S104 in FIG. 5: YES), the control section 21 resets an ID verification flag in the RAM 93 or nonvolatile memory 94 (S105 in FIG. 5), and returns control operation to step S101. Accordingly, when the ID codes do not match with each other in step S103, the call signal which includes the ID code will be sent again from the in-vehicle unit 20 to the outside. When the response signal is not sent from the portable unit 50 in response to the call signal from the in-vehicle unit 20, steps S101 to S105 are repeated. As a result, the call signal including the ID code is sent from the in-vehicle unit 20 at predetermined time intervals t1.

When it is determined that the ID codes match with each other (S103 in FIG. 5: YES), the control section 21 sets the ID verification flag in the RAM 93 or nonvolatile memory 94 (S106 of FIG. 5), and ends the ID code verification.

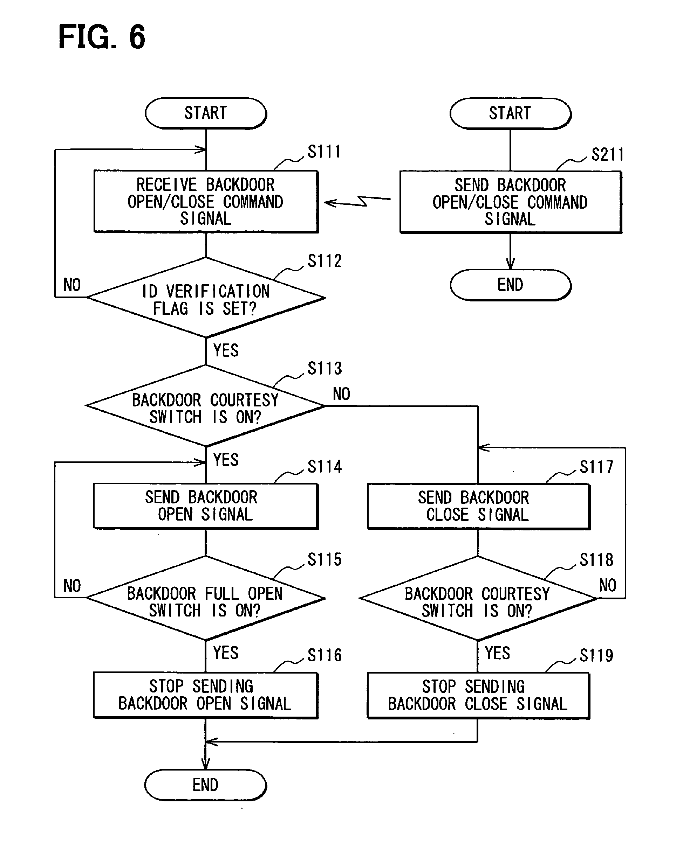

FIG. 6 is a flowchart which shows the backdoor open/close processing in the in-vehicle unit 20 and the portable unit 50.

When the user depresses the power backdoor button 58 of the portable unit 50, the transmitting section 53 of the portable unit 50 sends a radio signal including a backdoor open/close command (backdoor open/close command signal) (S211 in FIG. 6). To describe particularly, when detecting the manipulation on the power backdoor button 58, the control section 52 outputs the backdoor open/close command to the transmitting section 53. The transmitting section 53 receives the backdoor open/close command, modulates the backdoor open/close command, and transmits the modulated backdoor open/close command signal.

In the in-vehicle unit 20, the receiver 23 receives the modulated backdoor open/close command signal sent from the portable unit 50, demodulates the command signal, and outputs the demodulated backdoor open/close command to the control section 21 (S111 in FIG. 6).

When receiving the backdoor open/close command from the receiver 23, the control section 21 determines whether or not the ID verification flag in the RAM 93 or nonvolatile memory 94 is set (S112 in FIG. 6). If the ID verification flag in the RAM 93 or nonvolatile memory 94 is not set (S112 in FIG. 6: NO), the control section 21 returns control operation to step S111.

If the ID verification flag in the RAM 93 or nonvolatile memory 94 is set (S112 in FIG. 6: YES), the control section 21 determines whether or not the backdoor courtesy switch 17a is "ON," in other words, whether or not the backdoor 17 is closed (S113 in FIG. 6).

When the backdoor courtesy switch 17a is "ON," in other words, when the backdoor 17 is closed (S113 in FIG. 6: YES), the control section 21 sends a backdoor open signal to the backdoor opener 40 (S114 in FIG. 6). Then, based on whether or not the power backdoor open switch 17b is "ON," the control section 21 determines whether or not the backdoor 17 is fully opened (S115 in FIG. 6).

When the power backdoor full open switch 17b is not "ON," in other words, when the backdoor 17 is not fully opened (S115 in FIG. 6: NO), the control section 21 returns control operation to step S114 and repeats sending the backdoor open signals. As a result, the backdoor 17 is gradually opened.

When the power backdoor full open switch 17b is "ON," in other words, when the backdoor 17 is fully opened (S115 in FIG. 6: YES), the control section 21 stops sending the backdoor open signal (S116 in FIG. 6). As a result, the backdoor 17 stops in a fully opened position.

When the backdoor courtesy switch 17a is "OFF," in other words, when the backdoor 17 is opened (S113 in FIG. 6: NO), the control section 21 sends a backdoor close signal to the backdoor opener 40 (S117 in FIG. 6). Then, based on whether or not the backdoor courtesy switch 17a is "ON," the control section 21 determines whether or not the backdoor 17 is closed (S118 in FIG. 6).

When the backdoor courtesy switch 17a is not "ON," in other words, when the backdoor 17 is open (S118 in FIG. 6: NO), the control section 21 returns control operation to step S117 and repeats sending the backdoor close signals. As a result, the backdoor 17 is gradually closed.

Then, when the backdoor courtesy switch 17a is turned "ON" and the backdoor 17 is completely closed (S118 in FIG. 6: YES), the control section 21 stops sending the backdoor close signal (S119 in FIG. 6). As a result, the backdoor 17 stops in a closed state.

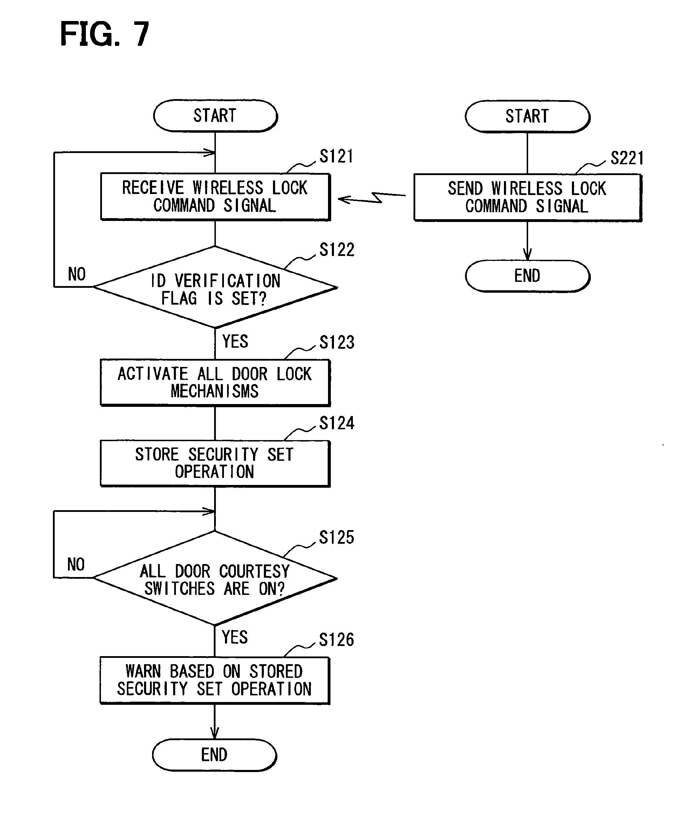

FIG. 7 is a flowchart showing wireless lock processing in the portable unit 50 and in-vehicle unit 20 when the wireless lock button 54 of the portable unit 50 is depressed by the user in a state where the hood 12, which is the second open/close object, is opened.

When the user manipulates the wireless lock button 54 of the portable unit 50, the transmitting section 53 of the portable unit 50 sends a radio signal including a wireless lock command (wireless lock command signal) (S221 in FIG. 7). To describe particularly, when detecting the manipulation on the wireless lock button 54, the control section 52 outputs a wireless lock command to the transmitting section 53. The transmitting section 53 receives the wireless lock command, modulates the command, and transmits a wireless lock command signal.

In the in-vehicle unit 20, the receiver 23 receives the wireless lock command signal sent from the portable unit 50, demodulates the command signal, and outputs the demodulated wireless lock command to the control section 21 (S121 in FIG. 7).

When receiving the wireless lock command from the receiver 23, the control section 21 determines whether or not the ID verification flag in the RAM 93 or nonvolatile memory 94 is set (S122 in FIG. 7). If the ID verification flag in the RAM 93 or nonvolatile memory 94 is not set (S122 in FIG. 7: NO), the control section 21 returns its operation to step S121.

When the ID verification flag in the RAM 93 or nonvolatile memory 94 is set (S122 in FIG. 7: YES), the control section 21 activates lock mechanisms for all doors (driver's seat swing door 13, passenger seat swing door 14, right slide door 15, left slide door 16, and backdoor 17) or the control section 21 locks all doors (S123 in FIG. 7), and stores the security set operation triggered by the wireless lock operation in the RAM 93 or nonvolatile memory 94 (S124 in FIG. 7).

Then, based on whether or not all the door courtesy switches are "ON," the control section 21 determines whether or not all the doors (driver's seat swing door 13, passenger seat swing door 14, right slide door 15, left slide door 16, and backdoor 17) are closed (S125 in FIG. 7).

When the all the door courtesy switches are not "ON," in other words, when all the doors are not closed (S125 in FIG. 7: NO), the control section 21 waits until the all the door courtesy switches turn "ON," in other words, until all the doors are closed.

When the all the door courtesy switches are "ON," in other words, when all the doors are closed (S125 in FIG. 7: YES), based on the stored security set operation, the control section 21 warns the user that the state of the vehicle has not been shifted to the guarded state (the security cannot be set) by sound and light of the vehicle warning device 60 (S126 in FIG. 7) and ends the wireless lock processing. For example, in the present embodiment, if the state of the vehicle is shifted to the guarded state, the security will be set a predetermined time after the state has been shifted to the guarded state.

In Embodiment 1, according to the antitheft device for the vehicle, the security set operation triggered by the wireless lock operation is stored before the backdoor 17 is closed. When the backdoor 17 has been closed, the processing by the security set operation is conducted. When all the doors are closed, the vehicle warning device 60 warns through sound and light of whether or not the security set operation is stored. If the hood 12 is still open when the all other doors have been closed, the security set operation (i.e., a command for the security set operation) is stored. Based on the stored security set operation, it is possible to warn that the security set cannot be activated. If the wireless door lock button 54 is operated after the power backdoor button 58 of the portable unit 50 has been operated, the warning based on the stored security set operation is given at a time of closing all the doors. As a result, the user will not confuse the warning with the operation answerback of the backdoor 17.

In Embodiment 1, whether or not the security operation is stored is warned when all the doors have been closed. However, whether or not the security operation is stored may be warned in timing of operating the wireless door lock button 54 (Modification 1), or whether or not the security operation is stored may be warned when the hood 12 is closed (Modification 2).

### <Modification 1>

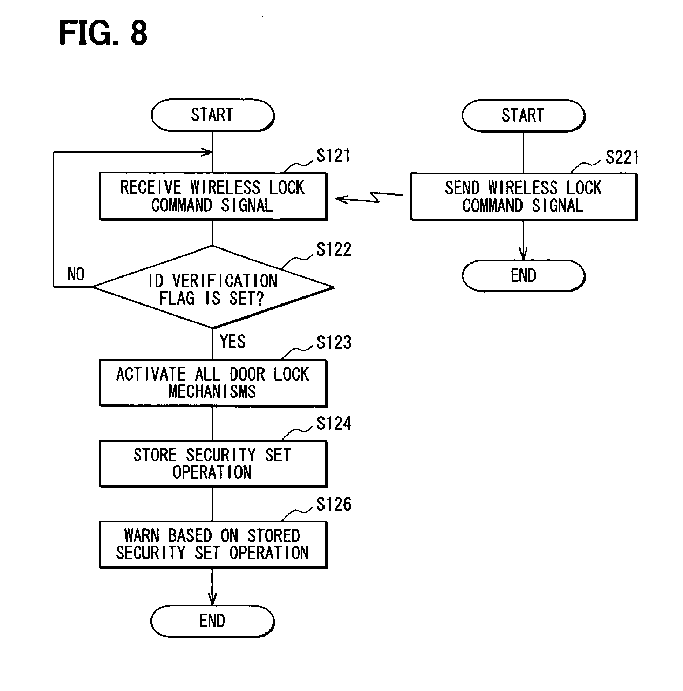

FIG. 8 is a flowchart of Modification 1 showing wireless lock processing in the portable unit 50 and in-vehicle unit 20 when the user depresses the wireless lock button 54 of the portable unit 50 in a state, where the hood 12 serving as the second open/close object is opened.

When the user depresses the wireless lock button 54 of the portable unit 50, the transmitting section 53 of the portable unit 50 sends a radio signal including a wireless lock command (wireless lock command signal)(S221 in FIG. 8).

In the in-vehicle unit 20, the receiver 23 receives the wireless lock command signal sent from the portable unit 50, demodulates it, and outputs the demodulated wireless lock command to the control section 21 (S121 in FIG. 8).

Upon receipt of the wireless lock command from the receiver 23, the control section 21 determines whether or not the ID verification flag in the RAM 93 or in the nonvolatile memory 94 is set (S122 in FIG. 8). If the ID verification flag in the RAM 93 or in the nonvolatile memory 94 is not set (S122 in FIG. 8: NO), the control section 21 returns control operation to step S121.

If the ID verification flag in the RAM 93 or in the nonvolatile memory 94 is set (S122 in FIG. 8: YES), the control section 21 activate all door lock mechanisms (S123 in FIG. 7) and stores the security set operation in the RAM 93 or nonvolatile memory 94 (S124 in FIG. 8). By using the sound and light of the vehicle warning device 60, the control section 21 further warns (informs) the user that the security set operation is stored but that the state of the vehicle is not shifted to the guarded state (the security cannot be set) (S126 in FIG. 8) and ends the wireless lock processing. For example, when the security set operation is stored, the command signal for activating the security remains active.

According to Modification 1, at a time when the wireless door lock button 54 is operated, whether or not the security set operation is stored is reported (warned). As a result, when the wireless door lock button 54 is operated after the power backdoor button 58 of the portable unit 50 has been operated, it is warned that the security cannot be set while the backdoor 17 is being closed.

### <Modification 2>

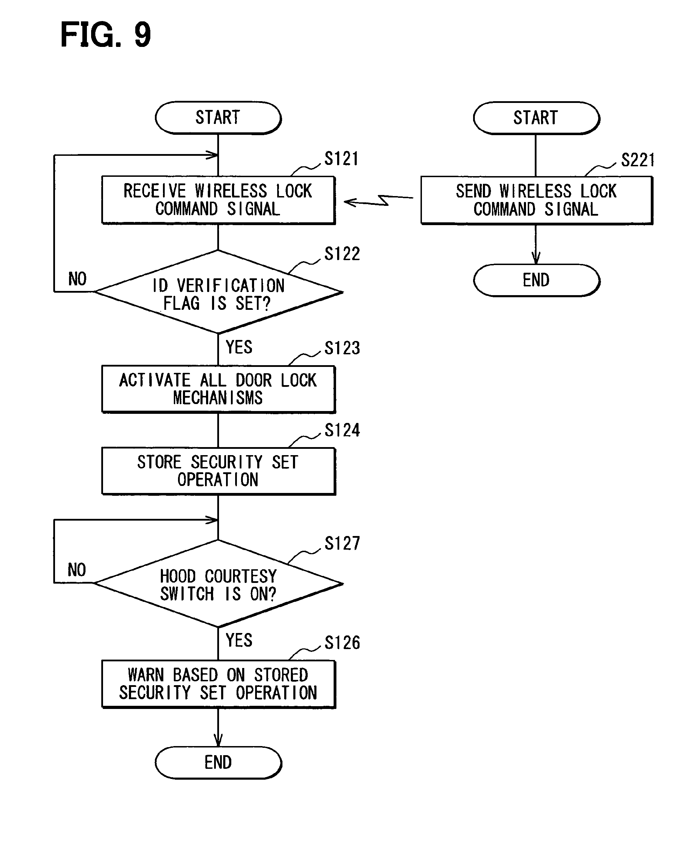

FIG. 9 is a flowchart showing wireless lock processing in the portable unit 50 and in-vehicle unit 20 when the user depresses the wireless lock button 54 of the portable unit 50 with the hood 12 being the second open/close object opened in Modification 2.

When the user depresses the wireless lock button 54 of the portable unit 50, the transmitting section 53 of the portable unit 50 sends a radio signal (i.e., wireless lock command signal) including a wireless lock command (S221 in FIG. 9).

In the in-vehicle unit 20, the receiver 23 receives the wireless lock command signal sent from the portable unit 50, demodulates it, and outputs the demodulated wireless lock command to the control section 21 (S121 in FIG. 9).

Upon receipt of the wireless lock command from the receiver 23, the control section 21 determines whether or not the ID verification flag in the RAM 93 or nonvolatile memory 94 is set (S122 in FIG. 9). If the ID verification flag in the RAM 93 or nonvolatile memory 94 is not set (S122 in FIG. 9: NO), the control section 21 returns control operation to step S121.

If the ID verification flag in the RAM 93 or nonvolatile memory 94 is set (S122 in FIG. 9: YES), the control section 21 activates all door lock mechanisms or locks the mechanisms (S123 in FIG. 9), and stores the security set operation in the RAM 93 or nonvolatile memory 94 to keep the command for setting the security active (S124 in FIG. 9)

Then, based on whether or not the hood courtesy switch 12a is "ON," the control section 21 determines whether or not the hood 12 is opened (S127 in FIG. 9).

When the hood courtesy switch 12a is not "ON," in other words, when the hood 12 is opened (S127 in FIG. 9: NO), the control section 21 waits until the hood courtesy switch 12a turns "ON," in other words, until the hood 12 is closed.

When the hood courtesy switch 12a is "ON," in other words, when the hood 12 is closed (S127 in FIG. 9: YES), though the security set operation has been stored, by using the vehicle warning device 60 with sound and light, the control section 21 warns the user that the state of the vehicle is not shifted to the guarded state (or that the security set is unable to be performed) (S126 in FIG. 9), and ends the wireless lock processing.

According to Modification 2, when the hood 12 is closed, whether or not the security set operation is stored is warned. As a result, the security can be set again easily. This is because the user can be warned immediately before the user leave the vehicle 10 in a state, where the vehicle 10 is stopped.

### (Embodiment 2)

In Embodiment 1, including Modifications 1 and 2, if the wireless door lock button 54 is operated while the hood 12 is opened, regardless of the order of operations for closing the hood 12 and for closing the backdoor 17, the user can be warned that the security cannot be set. However, the security set operation triggered by the operation of the wireless door lock button 54 may be stored when the backdoor 17 is opened regardless of an open/close state of the hood 12, and then the lock answerback and the security set may be executed when the backdoor 17 gets closed.

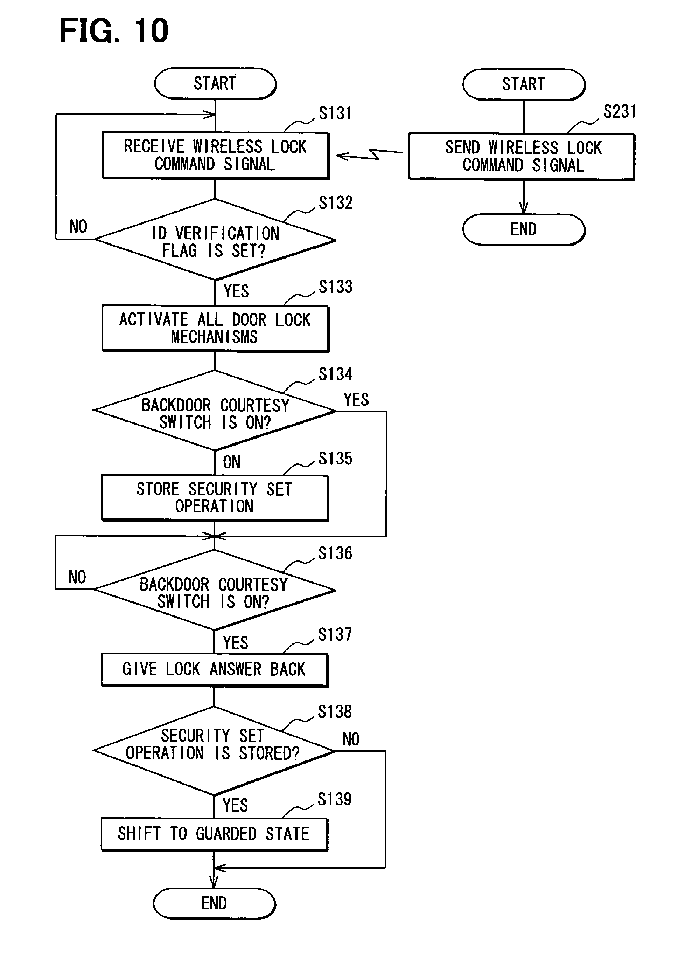

FIG. 10 is a flowchart showing wireless lock processing in the portable unit 50 and in-vehicle unit 210 in the antitheft device for a vehicle according to Embodiment 2 of the present invention.

Further, in the antitheft device for the vehicle according to Embodiment 2, with respect to the parts not particularly referred to, they are constructed similarly to those in the antitheft device for the vehicle according to Embodiment 1. Therefore, the drawings and detailed explanation thereof will be omitted.

In the explanation of the operations of the antitheft device for the vehicle of Embodiment 2, the difference between the above and the antitheft device for the vehicle of Embodiment 1 will mainly be described.

When the user depresses the wireless lock button 54 of the portable unit 50, the transmitting section 53 of the portable unit 50 transmits a wireless signal (wireless lock command signal) including a wireless lock command (S231 in FIG. 10).

In the in-vehicle unit 20, the receiver 23 receives the wireless lock command signal sent from the portable unit 50 and demodulates it. Further, the receiver 23 outputs the demodulated wireless lock command to the control section 21 (S131 in FIG. 10).

Upon receipt of the wireless lock command from the receiver 23, the control section 21 determines whether or not the ID verification flag in the RAM 93 or nonvolatile memory 94 is set (S132 in FIG. 10). If the ID verification flag in the RAM 93 or nonvolatile memory 94 is not set (S132 in FIG. 10: NO), the control section 21 returns control operation to step S131.

When the ID verification flag in the RAM 93 or nonvolatile memory 94 is set (S132 in FIG. 10: YES), the control section 21 activates all door lock mechanisms (S133 in FIG. 10).

Then, based on whether or not the backdoor courtesy switch 17a is "ON," the control section 21 determines whether or not the backdoor 17 is closed (S134 in FIG. 10). When the backdoor courtesy switch 17a is not "ON," in other words, when the backdoor 17 is opened (S134 in FIG. 10: NO), the control section 21 stores the security set operation in the RAM 93 or nonvolatile memory 94 (S135 in FIG. 10). When the backdoor courtesy switch 17a is "ON," in other words, when the backdoor 17 is closed (S134 in FIG. 10: YES), the control section 21 bypasses step S135.

Then, based on whether or not the backdoor courtesy switch 17a is "ON," the control section 21 determines whether or not the backdoor is closed (S136 in FIG. 10). When the backdoor courtesy switch 17a is not "ON," in other words, when the backdoor 17 is opened (S136 in FIG. 10: NO), the control section 21 waits until the backdoor 17 is closed by repeating operation in step S136.

When the backdoor courtesy switch 17a is "ON," in other words, when the backdoor 17 is closed (S136 in FIG. 10: YES), the control section 21 executes the lock answerback (S137 in FIG. 10), and determines whether or not the security set operation is stored (S138 in FIG. 10).

If the security set operation is stored (S138 in FIG. 10: YES), the control section 21 shifts the state of the vehicle to the guarded state, where the security can be set (S139 in FIG. 10), and ends the wireless lock processing.

If the security set operation is not stored (S138 in FIG. 10: NO), the control section 21 bypasses step S139 and ends the wireless lock processing.

According to Embodiment 2, the security set operation is stored only when the backdoor 17 is opened. At a time when the backdoor 17 gets closed, the lock answerback and setting of the security are executed. Therefore, the security can reliably be set, and the user is limited from leaving his or her vehicle without setting the security.

In each of the above embodiments, as an example, the backdoor 17 is described as the first opening/closing object. However, the first opening/closing object of the present invention can be applied to the slide doors 15, 16 or ordinary swing doors 13, 14.

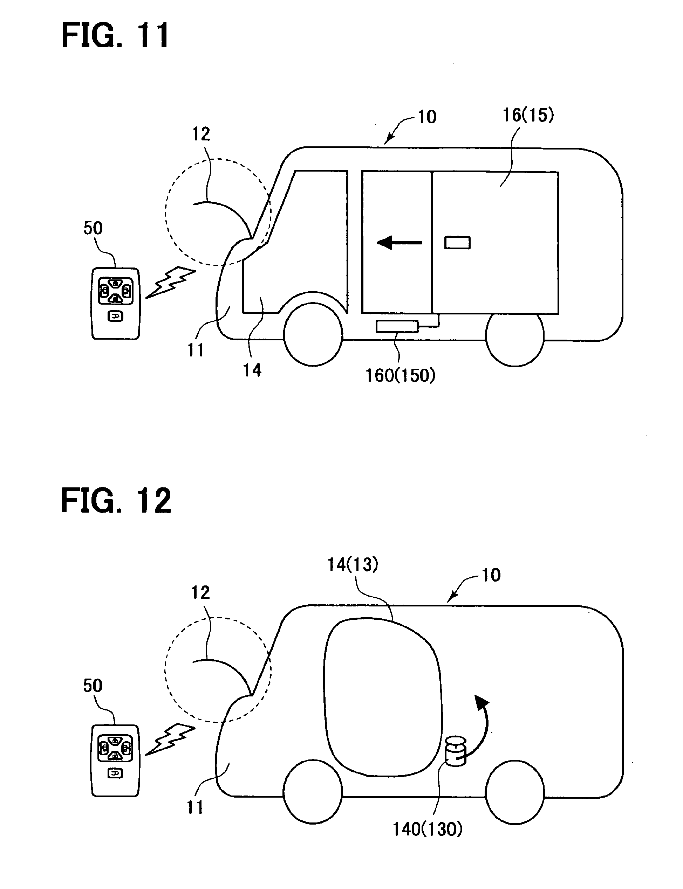

For example, FIG. 11 shows an example, in which it is assumed that the first opening/closing objects are the slide doors 15 and 16. The power slide door buttons 56, 57 are operated and further, the security set operation triggered by the wireless lock operation by the user is stored before the slide doors 15, 16 are closed. When the slide doors 15, 16 are closed, the process by the security set operation is executed. Then, at a timing of closing all the doors, whether or not the security set operation is stored is warned using the vehicle warning device 60 using the sound and the light. As a result, at the time when all the doors are closed, if the hood 12 is still open, the warning of that the security cannot be set can be given.

Also, if the wireless door lock button 54 is operated after the power slide door buttons 56, 57 of the portable unit 50 have been operated, the warning of the storing of the security set operation is given at a time when all the doors are closed. As a result, the user will not confuse the warning with the operation answerback of the slide doors 15, 16.

As shown in FIG. 12, if the first opening/closing objects are the swing doors 13, 14, closers 130, 140 are operated, and before the swing doors 13, 14 are closed, the security set operation triggered by the wireless lock operation is stored. When the swing doors 13, 14 are closed, the process of the security set operation is executed. Then, at a time when all the doors are closed, whether or not the security set operation is stored is warned through the vehicle warning device 60 using the sound or the light. As a result, at the time when all the doors are closed, if the hood 12 is still open, the warning of that the security cannot be set can be given.

In contrast, in each of the above embodiment, the hood 12 serves as the second opening/closing object. However, in a case, where the vehicle has a luggage door for a storage room of the vehicle, the luggage door may be alternatively serve as the second opening/closing object.

Although the invention has been embodied in several forms, the present embodiments are illustrative and not restrictive. Therefore, variations thereto may occur to those skilled in the art within the scope of the invention as hereinafter claimed.

## Claims

1. An antitheft device for a vehicle (10), wherein the vehicle (10) has a security mechanism (30), a warning device (60), a first opening/closing object (13 to 17), a second opening/closing object (12), and a portable unit (50), wherein the first opening/closing object (13 to 17) allows a user of the vehicle (10) to enter into an occupant compartment through the first opening/closing object (13 to 17) from an exterior of the vehicle (10), wherein the second opening/closing object (12) is restricted from allowing the user to enter into the occupant compartment through the second opening/closing object (12), wherein the portable unit (50) transmits a signal to perform a security set of the security mechanism (30) when the portable unit (50) is operated, the antitheft device comprising:
a controller (91) configured to cause the warning device (60) at a predetermined time to warn the user that the security set is unable to be performed, if the portable unit (50) is operated while the first opening/closing object (13 to 17) and the second opening/closing object (12) are opened.

2. The antitheft device according to claim 1, wherein the predetermined time is a time when the first opening/closing object (13 to 17) is closed.

3. The antitheft device according to claim 1, wherein:
the predetermined time is a time when the portable unit (50) is operated.

4. The antitheft device according to claim 1, wherein the predetermined time is a time when the second opening/closing object (12) becomes closed in a state, where the first opening/closing object (13 to 17) is closed.

5. The antitheft device according to any one of claims 1 to 4, wherein the first object is a backdoor (17).

6. The antitheft device according to any one of claims 1 to 4, wherein the first object is a slide door (15, 16).

7. The antitheft device according to any one of claims 1 to 4, wherein the first object is a swing door (13, 14).

8. An antitheft device for a vehicle (10), wherein the vehicle (10) has a security mechanism (30), a first opening/closing object (13 to 17), and a portable unit (50), wherein the first opening/closing object (13 to 17) allows a user of the vehicle (10) to enter into an occupant compartment through the first opening/closing object (13 to 17) from exterior of the vehicle (10), wherein the portable unit (50) transmits a signal to perform a security set of the security mechanism (30) when the portable unit (50) is operated, the antitheft device comprising:
a memory (93, 94) configured to store the security set operation of the security mechanism (30) when the portable unit (50) is operated while the first opening/closing object (13 to 17) is opened; and
a controller (91) configured to shift a state of the vehicle (10) into a certain state at a time when the first opening/closing object (13 to 17) becomes closed, wherein the security set of the security mechanism (30) is able to be performed in the certain state based on the security set operation stored in the memory (93, 94).

9. The antitheft device according to claim 8, wherein the first object is a backdoor (17).

10. The antitheft device according to claim 8, wherein the first object is a slide door (15, 16).

11. The antitheft device according to claim 8, wherein the first object is a swing door (13, 14).
